# FASCICULE DE BREVET EUROPEEN

(11) **EP 4 408 641 B1**
(45) Date de publication et mention de la délivrance du brevet: **12.11.2025**
(21) Numéro de dépôt: 22786356.0
(22) Date de dépôt: 22.09.2022
(51) Int. Cl.: B29C 64/118, B29C 64/209, B29C 64/329, B29C 64/343, B29C 64/393, B33Y 40/00, B33Y 50/02

(54) **BLOC D'IMPRESSION POUR MACHINE DE FABRICATION ADDITIVE**
DRUCKWERK FÜR EINE MASCHINE ZUR ADDITIVEN FERTIGUNG
PRINTING BLOCK FOR ADDITIVE MANUFACTURING MACHINE

(30) Priorité: 01.10.2021 FR 2110428
(43) Date de publication de la demande: 07.08.2024
(73) Titulaire: Cogit Composites, 18390 Saint-Germain du Puy (FR)
(72) Inventeur: ROUA, Christophe, 18000 Bourges (FR)
(74) Mandataire: IP Trust
(86) Numéro de dépôt international: PCT/EP2022/076364
(87) Numéro de publication internationale: WO 2023/052232

(56) Documents cités:
- WO-A1-2020/136383
- CN-A- 105 690 762
- CN-A- 106 623 936

## Description

Le domaine de l'invention est celui de la conception et de la fabrication de machines de fabrication additive.

Plus précisément, l'invention concerne en particulier un bloc d'impression (également appelé tête d'impression) pour machine de fabrication additive. Les machines de fabrication additive sont plus largement connues sous la dénomination « imprimantes 3D ».

Dans le domaine de la fabrication additive, plusieurs technologies coexistent, parmi lesquelles la fabrication par dépôt de matière.

La fabrication par dépôt de matière, notamment la plus connue qui consiste à déposer une matière visqueuse (par exemple du plastique), met en œuvre un bloc d'impression dans lequel entre une matière sous forme solide, cette matière est ensuite fondue pour adopter un état visqueux et être déposée sur un plateau d'impression par une buse.

Classiquement, le bloc d'impression comprend un châssis sur lequel sont montés des moyens de chauffe de la matière visqueuse et une buse d'extrusion de la matière visqueuse.

Le bloc d'impression et le plateau d'impression ont un mouvement de déplacement relatif qui permet de réaliser une pièce par ajout de matière en trois dimensions, c'est-à-dire selon deux directions orthogonales s'étendant dans le plan du plateau d'impression et selon une troisième direction orthogonale avec les deux premières direction et transversale au plateau d'impression.

Dans la catégorie du dépôt de matière plastique, la matière à faire fondre peut se présenter soit sous forme d'un fil conditionné en bobine, soit sous la forme d'une poudre (ou de granulés).

Le terme poudre s'entend ici à la fois pour des particules de faibles dimensions et pour des particules de grandes dimensions également connues sous la dénomination usuelle de granulés.

Dans le cas du dépôt d'une matière autre que plastique, par exemple du béton, il est impossible de conditionner la matière à déposer sous forme de fil, seuls les poudres ou granulés peuvent être utilisés.

Lorsque la matière se présente sous la forme d'un fil, le débit de matière à déposer peut être adapté de manière simple et réactive par contrôle de l'avancée de la vitesse du fil de matière dans le bloc d'impression.

En revanche, bien que l'utilisation d'une poudre présente un coût d'utilisation plus avantageux que le fil (de l'ordre de six à dix fois moins élevé), le contrôle du débit est plus difficile, comme décrit ci-après.

Les variations de vitesses entraînent une inertie du bloc d'impression qui peut engendrer des défauts de fabrication. Cette inertie est d'autant plus grande lorsque la matière solide, qui est à fondre pour la rendre visqueuse, se présente sous la forme d'une poudre ou de granulés.

Ces défauts de fabrication peuvent par exemple prendre la forme de « porosités », c'est-à-dire d'absences ponctuelles de matière, ou au contraire de « bavures » c'est-à-dire de surplus de matière.

Ces porosités ou bavures sont notamment dues à la combinaison de l'inertie avec le déplacement relatif entre le bloc d'impression et le plateau d'impression.

Suite à la fabrication, il est alors nécessaire de réaliser des opérations manuelles de finition durant lesquelles les porosités qui sont visibles et accessibles sont remplis de matière, et les bavures sont éliminées. Ces opérations de finition entraînent alors une augmentation du temps de fabrication et donc une augmentation du coût de fabrication. En revanche, lorsque les porosités ne sont pas visibles ou accessibles (par exemple des inclusions de gaz), l'étape de finition ne peut pas être effectuée et la structure mécanique de la pièce peut être affectée.

En début de cycle de fabrication, l'inertie du bloc d'impression peut entrainer un retard de l'approvisionnement de la matière, et donc un retard de dépôt de matière sur le plateau (à cause d'un débit défaillant), alors que le déplacement relatif entre le plateau d'impression et le bloc d'impression a déjà débuté, ce qui engendre les porosités. Les porosités peuvent alors être situées entre le plateau et la nouvelle couche de matière, ou entre le plateau et un substrat pouvant prendre la forme d'une pièce existante (défaut généralement visible et accessible) ou d'une couche préalablement déposée (défaut généralement invisible et inaccessible pouvant nuire à l'intégrité structurelle de la pièce imprimée).

L'inertie est notamment due à la viscosité des matériaux, ici non newtoniens, qui sont sensibles à leur vitesse de sollicitation par cisaillement.

Au contraire, en fin de cycle de fabrication, l'inertie du bloc d'impression peut entrainer un maintien de la fonte de la matière, et donc un dépôt continu de matière sur le plateau ou sur un substrat, alors que le déplacement relatif entre le plateau d'impression et le bloc d'impression est arrêté ou hors de la zone d'impression, ce qui engendre les bavures.

La fin de cycle et le début de cycle peuvent également correspondre respectivement à un arrêt temporaire de dépôt de matière et une reprise de dépôt lors d'une même fabrication, entre lesquels intervient un déplacement relatif rapide entre le plateau d'impression et le bloc d'impression par exemple pour changer de zone de dépôt de matière.

Pour éviter cela, des algorithmes de contrôle du bloc d'impression ont été développés.

Grâce à ces algorithmes, il est possible d'avancer ou de retarder la chauffe de la matière pour la faire coïncider avec le déplacement relatif entre le plateau d'impression et le bloc d'impression.

Toutefois, ces algorithmes sont lourds et demandent des ressources importantes de calcul.

En outre, ces algorithmes ne tiennent pas compte des différentes compositions de matière.

En effet, les matières plastiques à fondre, peuvent être réalisées à partir de compositions diverses. Ainsi, pour obtenir un matériau sous une même appellation, différentes compositions peuvent être utilisées, ou à tout le moins, différents dosages de mêmes composants peuvent être appliqués. Ces matériaux d'une même appellation peuvent ainsi présenter des viscosités différentes.

Il en résulte alors que les paramètres de débit peuvent changer en fonction du matériau utilisé, des vitesses de sollicitation et des conditions thermiques, bien que le matériau conserve une dénomination identique.

Dès lors, s'ils sont atténués ou limités en nombre, les porosités et les bavures restent présents et demandent une étape de finition suite à la fabrication.

WO 2020/136383 A1 divulgue le préambule de la revendication 1.

L'invention a notamment pour objectif de pallier les inconvénients de l'art antérieur.

Plus précisément, l'invention a pour objectif de proposer un bloc d'impression permettant de limiter les effets néfastes des régimes transitoires de débit, dus à l'inertie, sur la fabrication.

L'invention a également pour objectif de fournir un tel bloc d'impression permettant le contrôle de matière à déposer sur le plateau d'impression ou le substrat.

L'invention a en outre pour objectif de fournir un tel bloc d'impression simple de fabrication et d'entretien.

Ces objectifs, ainsi que d'autres qui apparaîtront par la suite, sont atteints grâce à l'invention qui a pour objet un bloc d'impression pour machine de fabrication additive par dépôt de matière visqueuse obtenue à partir de poudre, le bloc d'impression comprenant :
- des moyens d'alimentation en matière visqueuse, incluant une vis sans fin destinée à entraîner la matière visqueuse,
- des moyens de dépose de matière visqueuse,

dans lequel le bloc d'impression comprend également :
   - au moins une chambre de stockage de matière visqueuse délimitée par une paroi interne présentant au moins une portion mobile, la chambre définissant un volume de stockage et étant intercalée entre les moyens d'alimentation et les moyens de dépose ;
   - au moins un actionneur agissant sur le déplacement de la portion mobile pour faire évoluer le volume de la chambre de stockage,
caractérisé en ce que le bloc d'impression comprend des moyens de pompage de matière visqueuse, intercalés entre la chambre de stockage et les moyens de dépose, et en ce que le bloc d'impression comprend un châssis dans lequel est réalisée la chambre de stockage,
et en ce que les moyens de pompage comprennent :
   - un conduit pratiquée dans le châssis, le conduit formant une voie de passage de matière visqueuse depuis la chambre de stockage vers les moyens de dépose,
   - un capot monté fixe sur le châssis, le capot refermant le conduit,
   - un mécanisme de roues dentées agencé dans le conduit,
le mécanisme de roues dentées entraînant la matière visqueuse depuis la chambre de stockage pour la refouler vers les moyens de dépose.

La chambre de stockage de matière visqueuse permet de compenser l'inertie du bloc d'impression à chaque variation significative de débit de matière, notamment à chaque changement de vitesse, par exemple en début et en fin d'impression.

En effet, grâce à l'actionneur qui agit sur le déplacement de la portion mobile de la chambre de stockage, il est possible d'éjecter la matière visqueuse hors de la chambre en direction des moyens de dépose ou, au contraire, de la retenir dans la chambre.

Lors du début d'impression, ou de la reprise de l'impression, le temps de mise en route des moyens d'alimentation en matière visqueuse, notamment la mise en rotation de la vis sans fin, engendre une latence dans l'alimentation des moyens de dépose et donc un risque de porosité si le cycle a déjà débuté (déplacement relatif entre le plateau d'impression et le bloc d'impression). Cette latence peut être compensée par la réduction de volume de la chambre de stockage et donc l'alimentation des moyens de dépose par de la matière visqueuse.

Ainsi, la matière visqueuse peut-être déposée directement via les moyens de dépose pour commencer l'impression de manière rapide sans attendre l'obtention d'un débit nominal souhaité des moyens d'alimentation.

Au contraire, lors d'une réduction significative de débit, par exemple en fin ou en arrêt d'un cycle d'impression, l'actionneur peut permettre d'agrandir le volume de la chambre pour que la matière visqueuse produite par la vis soit contenue dans la chambre de stockage et n'alimente plus les moyens de dépose ce qui permet d'éviter les bavures.

En outre, la qualité d'interface entre chaque couche de matière déposée est accrue, ce qui bénéficie aux caractéristiques mécaniques de la pièce imprimée.

Un tel bloc d'impression permet donc de maîtriser le débit en tout circonstance, de sorte qu'il soit proportionnel à la vitesse de déplacement. En d'autres termes, un tel bloc permet un contrôler en temps réel du débit de matière extrudée pour qu'il soit conforme à des consignes de programmation d'impression.

Les moyens de pompage permettent d'obtenir un débit contrôlé d'alimentation des moyens de dépose.

Ainsi, en fonction de la vitesse de pompage, il est possible d'adapter le débit de matière visqueuse déposé par les moyens de dépose à partir des moyens de pompage.

Par ailleurs, lorsque la vitesse de déplacement relatif entre le plateau d'impression et le bloc d'impression est importante le débit de matière pompée peut être augmentée alors que lorsque la vitesse de déplacement relatif est faible, le débit de matière pompée peut être réduit.

En outre, l'utilisation des moyens de pompage peut permettre de conférer une finesse d'impression supérieure aux techniques connues d'extrusion à vis sans fin pour poudre ou granulés, par adaptation de la quantité de matière déposée en fonction des caractéristiques de la pièce à fabriquer. La finesse d'impression obtenue est alors comparable à celle des techniques de dépôt par fonte de matière sous forme de fil, pour lesquelles le débit est proportionnel à la vitesse d'avancement du fil.

Autrement dit, la chambre de stockage permet d'obtenir un stock tampon de matière visqueuse sous pression et toujours disponible, ce qui permet de compenser l'inertie des moyens d'alimentation à vis sans fin, et les moyens de pompage assurent ensuite le débit contrôlé de matière visqueuse transmise aux moyens de dépose.

Dans ce cas, la chambre de stockage permet également une alimentation des moyens de pompage sans les sur-contraindre mécaniquement ou hydrauliquement, ce qui risquerait de les bloquer ou, dans le pire des cas, de les détériorer prématurément.

Par l'utilisation du mécanisme de roues dentées, il est possible de maîtriser et de contrôler de manière fine la quantité de matière entraînée depuis la chambre de stockage vers les moyens de dépose par les moyens de pompage.

En effet, l'espace formé entre les dents des roues dentées d'une part et entre les roues dentées et le conduit d'autre part, reste constant, ce qui permet un pompage de matière à un débit équivalent en toutes conditions ou quasiment. Le débit est ainsi proportionnel à la rotation du mécanisme de roues dentées.

Selon un aspect avantageux, les moyens d'alimentation comprennent également un élément chauffant entourant au moins la vis sans fin.

L'élément chauffant permet ainsi, pour certaines matières, de faire passer lesdites matières de leur état solide (par exemple en poudre) à leur état visqueux permettant leur dépose par les moyens de dépose.

Selon un autre aspect avantageux, le bloc d'impression comprend également :
- des moyens de mesure de pression dans la chambre de stockage ;
- des moyens de pilotage de la vis sans fin,
les moyens de pilotage étant configurés pour piloter l'entraînement de la poudre par la vis sans fin à partir d'informations de pressions mesurées par les moyens de mesure de pression.

Le pilotage de la vis sans fin par les moyens de pilotage à partir d'informations de pression mesurées par les moyens de mesure de pression permet une réactivité optimale pour maîtriser le débit de matière visqueuse alimentant les moyens de dépose.

Ainsi, contrairement aux techniques existantes, ce pilotage des moyens d'alimentation permet de compenser la latence des moyens d'alimentation.

Selon un aspect avantageux, le bloc d'impression comprend également un obturateur intercalé entre la chambre de stockage et les moyens de dépose.

L'obturateur permet d'isoler les moyens de dépose de la chambre de stockage.

Ainsi, indépendamment de sa viscosité, il est possible d'empêcher la matière visqueuse d'atteindre les moyens de dépose et donc de créer des bavures non souhaitées lors de l'impression ou en fin de cycle d'impression.

En d'autres termes, l'obturateur forme une sécurité permettant d'éviter les bavures sur les pièces imprimées.

Selon un aspect avantageux, le capot présente une première cavité et une deuxième cavité destinées à être positionnées au-dessus du mécanisme de roues dentées, la première cavité communiquant avec le conduit du côté de la chambre de stockage, et la deuxième cavité communiquant avec le conduit du côté des moyens de dépose.

La première cavité et la deuxième cavité permettent de faciliter le passage de la matière dans les moyens de pompage. La viscosité de la matière visqueuse peut engendrer un risque de bouchage des moyens de pompage, ce risque étant ainsi évité, ou à tout le moins limité, grâce à la présence des cavités qui assure un passage aisé pour la matière visqueuse.

Selon un aspect avantageux, le bloc d'impression comprend :
- des moyens secondaires de dépose, en amont des moyens de pompage, reliés fluidiquement à la chambre de stockage,
- un clapet d'obturation intercalé entre les moyens secondaires de dépose et la chambre de stockage.

Les moyens secondaires de dépose, connectés fluidiquement à la chambre de stockage, permettent de créer une voie de décharge supplémentaire pour répondre à des besoins de débit élevés notamment.

Par exemple, les moyens secondaires de dépose peuvent être utilisés lorsque le déplacement relatif est rapide et/ou que la qualité d'impression est du type ébauche.

Par ailleurs, l'utilisation d'un clapet d'obturation permet de diriger l'intégralité de la matière visqueuse vers les moyens de dépose lorsque les moyens de pompage ne sont pas utilisés.

Selon un aspect avantageux, le bloc d'impression comprend un vérin incluant :
- une tige dont une extrémité forme la portion mobile de la paroi interne,
- un corps par rapport auquel la tige est mobile en translation,
et en ce que l'actionneur prend la forme d'un ressort de compression intercalé entre la tige et le corps, le ressort de compression tendant à écarter la tige du corps.

L'utilisation d'un vérin permet de modifier le volume de stockage de la chambre de stockage de manière rapide.

L'utilisation d'un ressort de compression permet de faciliter et de rendre automatique la modification du volume de la chambre de stockage pour obtenir une pression souhaitée à l'intérieur de la chambre de stockage.

En effet, en tarant le ressort de manière précise, ce dernier engendrera un déplacement de la tige de sorte à la positionner dans une position assurant un volume et une pression souhaités et prédéterminés à l'intérieur de la chambre de stockage.

En variante, le bloc d'impression comprend un vérin incluant :
- une tige dont une extrémité forme la portion mobile de la paroi interne,
- un corps par rapport auquel la tige est mobile en translation,
et en ce que l'actionneur prend la forme d'un moteur coopérant avec la tige pour déplacer la tige par rapport au corps.

L'utilisation d'un vérin permet de modifier le volume de stockage de la chambre de stockage de manière rapide.

De plus, le recours à un moteur permet à la fois de régler et de modifier finement la pression et le volume de la chambre de stockage mais également de faire diminuer ou augmenter de manière importante la taille de la chambre de stockage pour chasser la matière présente dans la chambre de stockage ou au contraire, remplir la chambre de stockage en vue d'un démarrage futur de cycle.

Selon un aspect avantageux, les moyens de pilotage sont également configurés pour piloter l'actionneur à partir d'informations de pressions mesurées par les moyens de mesure de pression.

Le pilotage de l'actionneur à partir des informations de pressions mesurées par les moyens de mesure de pression assure un remplissage ou un vidage de la chambre de stockage de manière optimale.

En effet, en fonction de la pression souhaitée à l'intérieur de la chambre de stockage, il est possible de piloter l'actionneur pour augmenter ou diminuer le volume et ainsi obtenir, à l'intérieur de la chambre de stockage une pression souhaitée.

Par exemple, en fin de cycle, il peut être préférable de couper les moyens d'alimentation et de vider la chambre de stockage intégralement jusqu' à obtenir une pression seuil correspondant à une chambre de stockage complètement vide.

L'invention concerne également une machine de fabrication additive par matière visqueuse obtenue à partir de poudre, caractérisée en ce qu'elle comprend un bloc d'impression tel que précédemment décrit.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig.1] la [Fig.1] est une représentation schématique de détail illustrant une machine de fabrication additive selon l'invention, cette machine comprenant un bloc d'impression selon un premier mode de réalisation ;
[Fig.2] la [Fig.2] est une représentation schématique en coupe d'un détail d'une machine de fabrication additive selon l'invention, cette machine comprenant un bloc d'impression selon un deuxième mode de réalisation ;
[Fig.3] la [Fig.3] est une représentation schématique de dessus du bloc d'impression de la [Fig.2], cette figure illustrant des moyens de pompage du bloc d'impression ;
[Fig.4] la [Fig.4] est une représentation schématique du fonctionnement des moyens de pompage du bloc d'impression des figures 2 et 3 ;
[Fig.5] la [Fig.5] est une représentation schématique en coupe d'un détail d'une machine de fabrication additive selon l'invention, cette machine comprenant un bloc d'impression selon un troisième mode de réalisation ;
[Fig.6] la [Fig.6] est une représentation schématique d'un bloc d'impression selon l'invention, selon une première forme de réalisation, illustrant une chambre de stockage présentant au moins une portion mobile, le bloc incluant un actionneur agissant sur le déplacement de la portion mobile de la chambre de stockage, la portion mobile étant représentée dans une première position ;
[Fig.7] la [Fig.7] est une représentation schématique d'un bloc d'impression selon l'invention, selon une deuxième forme de réalisation, illustrant une chambre de stockage présentant au moins une portion mobile, le bloc incluant un actionneur agissant sur le déplacement de la portion mobile de la chambre de stockage, la portion mobile étant représentée dans une deuxième position.

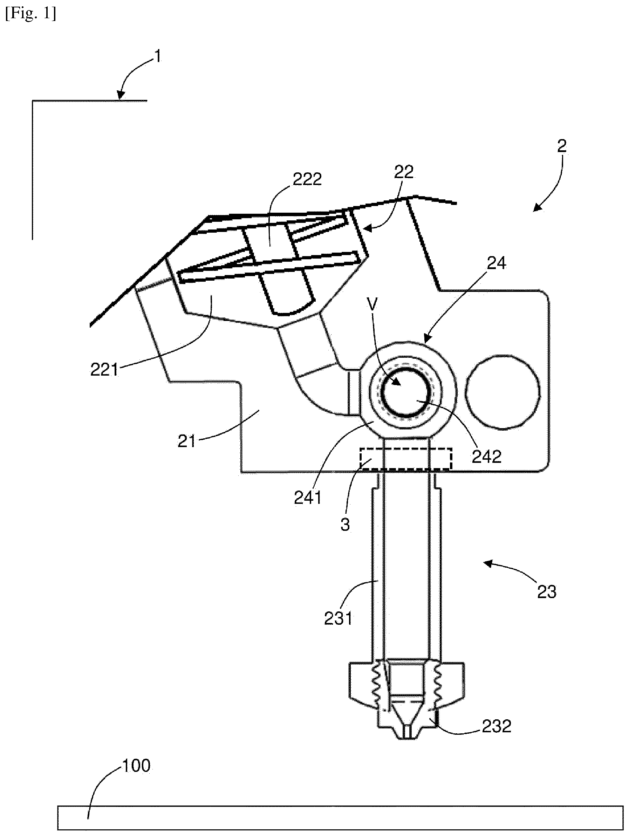

En référence aux figures 1, 2 et 5, une machine 1 de fabrication additive selon l'invention est illustrée.

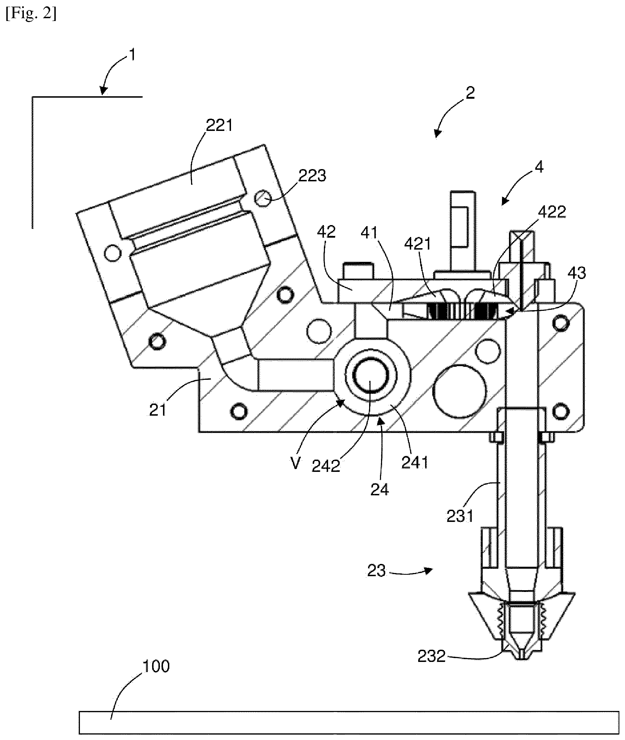

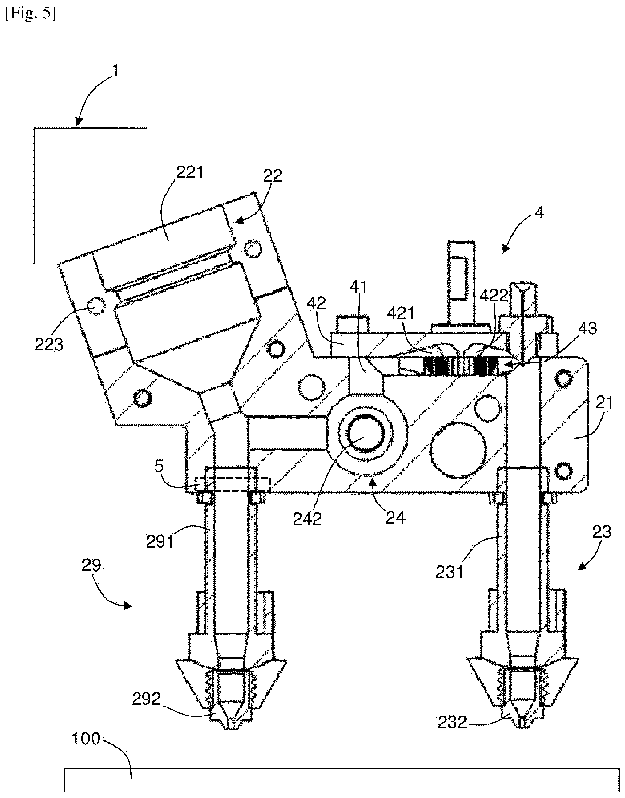

Plus particulièrement, la [Fig.1] concerne un premier mode de réalisation de la machine 1, les figures 2 à 4 concernent un deuxième mode de réalisation de la machine 1 et la [Fig.5] concerne un troisième mode de réalisation de la machine 1.

La machine 1 de fabrication additive comprend un plateau d'impression 100 et un bloc d'impression 2 permettant la dépose de matière visqueuse sur le plateau d'impression 100. La dépose de la matière visqueuse peut être faite directement sur le plateau d'impression 100, ou sur un substrat prenant la forme d'une couche de matière préalablement déposée, ou d'une pièce sur laquelle la matière est destinée à être déposée en vue d'une surimpression par exemple.

Pour la réalisation de pièces tridimensionnelles à partir de matière visqueuse, la machine 1 de fabrication additive fonctionne par déplacement relatif du plateau d'impression 100 par rapport au bloc d'impression 2.

Plus précisément, et selon les technologies existantes, le plateau d'impression 100 peut se déplacer tandis que le bloc d'impression 2 reste fixe ou inversement, le bloc d'impression 2 peut se déplacer tandis que le plateau d'impression 100 reste fixe.

En référence aux figures 1, 2 et 5, le bloc d'impression 2 comprend un châssis 21 sur lequel sont montés des moyens d'alimentation 22 en matière visqueuse et des moyens de dépose 23 de matière visqueuse.

Les moyens d'alimentation 22 comprennent notamment une trémie 221 et une vis sans fin 222 montée à l'intérieur de la trémie 221.

Les moyens d'alimentation 22 comprennent également un élément chauffant 223 permettant de chauffer la matière à l'intérieur de la trémie 221 pour la faire fondre. L'élément chauffant 223 peut être activé ou non en fonction de la matière reçue dans la trémie. En effet, certaines matières présentent déjà un état visqueux par permettant leur dépôt par les moyens de dépose 23.

La vis sans fin 222 permet quant à elle de diriger la matière visqueuse vers les moyens de dépose 23.

L'élément chauffant 223 est par exemple un circuit électrique ou une canalisation de fluide caloporteur entourant la trémie 221 pour permettre de chauffer la matière à fondre. La matière à fondre est par exemple une poudre de matière plastique. Le terme poudre s'entend ici à la fois pour des particules de faibles dimensions et pour des particules de grandes dimensions également connues sous la dénomination usuelle de granulés.

Les moyens de dépose 23 comprennent une tubulure 231 prolongeant le châssis 21 et une buse 232 située à une extrémité distale de la tubulure 231. La matière visqueuse s'écoule par la buse 232 sur le plateau d'impression 100.

Le bloc d'impression 2 comprend également une chambre de stockage 24 située entre les moyens d'alimentation 22 et les moyens de dépose 23.

La chambre de stockage 24 permet le stockage de matière visqueuse provenant des moyens d'alimentation 22.

Cette chambre de stockage 24 est délimitée par une paroi interne 241 présentant au moins une portion mobile 242.

La chambre de stockage 24 définit ainsi un volume V de stockage de matière visqueuse.

Le bloc d'impression 2 comprend également un actionneur 25.

L'actionneur 25 agit sur le déplacement de la portion mobile pour faire évoluer le volume V dans la chambre de stockage 24.

Plus précisément, le bloc d'impression 2 comprend un vérin 26 incluant :
- un corps 261 ;
- une tige 262 dont une extrémité forme la portion mobile 242 de la paroi interne 241 de la chambre de stockage 24.

La tige 262 est mobile en translation par rapport au corps 261.

La mobilité de la tige 262 par rapport au corps 261 est notamment assurée par l'actionneur 25.

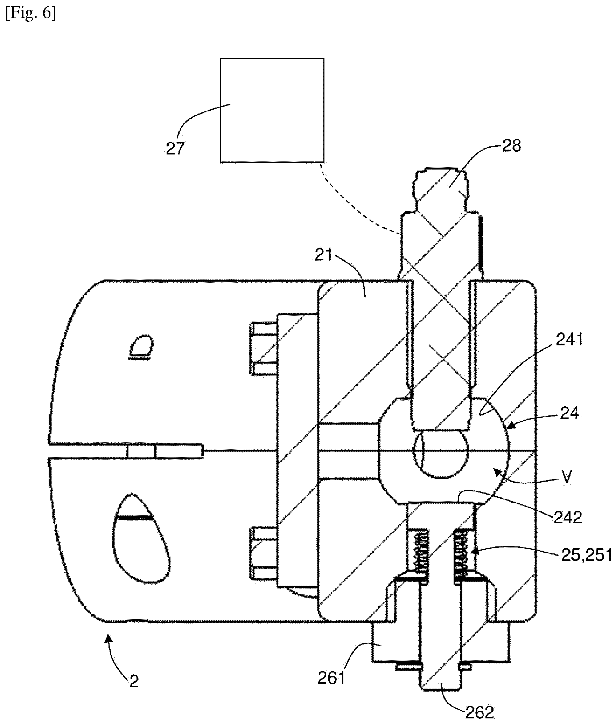

Selon une première forme de réalisation illustrée à la [Fig.6], l'actionneur 25 se présente sous la forme d'un ressort 251 de compression intercalé entre la tige 262 et le corps 261.

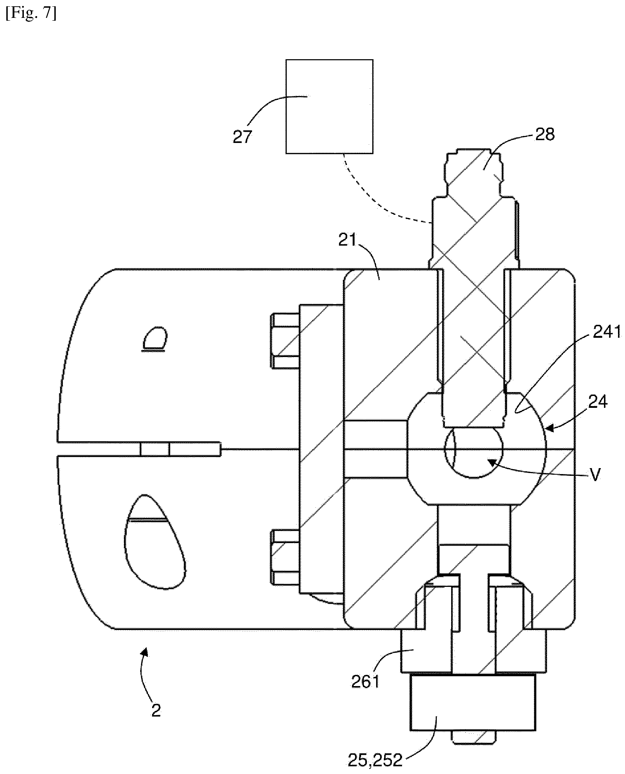

En référence à la [Fig.7], et selon une deuxième forme de réalisation, l'actionneur 25 se présente sous la forme d'un moteur 252.

Le bloc d'impression 2 comprend également des moyens de pilotage 27.

Ces moyens de pilotage 27 sont destinés notamment au pilotage de la vis sans fin 222 des moyens d'alimentation 22.

Le bloc d'impression 2 comprend en outre des moyens de mesure de pression 28 dans la chambre de stockage 24.

Les moyens de mesure de pression 28 permettent l'envoi aux moyens de pilotage 27 de données de pression à l'intérieur de la chambre de stockage 24 pour piloter les moyens d'alimentation 22.

Selon le premier mode de réalisation illustré sur la [Fig.1], le bloc d'impression 2 intègre un obturateur 3 intercalé entre la chambre de stockage 24 et les moyens de dépose 23.

L'obturateur 3 permet d'autoriser ou d'empêcher le dépôt de matière sur le plateau d'impression 100 par les moyens de dépose 23.

Autrement dit, l'obturateur 3 permet de retenir dans la chambre de stockage 24 la matière visqueuse provenant des moyens d'alimentation 22, ou au contraire d'autoriser une communication fluidique, via la chambre de stockage 24, entre les moyens d'alimentation 22 et les moyens de dépose 23.

Dans ce premier mode de réalisation, l'actionneur 25 se présente sous la forme d'un ressort de compression 251 tel qu'illustré sur la [Fig.6].

L'utilisation d'un ressort 251 de compression permet d'ajuster de manière automatique, c'est-à-dire sans pilotage dédié, le volume V de la chambre de stockage 24 de sorte à chercher l'obtention d'une pression constante à l'intérieur de la chambre de stockage 24.

Autrement dit, le ressort de compression 251 tend à repousser la portion mobile 242 de la paroi interne 241 de la chambre de stockage 24 de sorte à obtenir une pression constante, ou quasiment, à l'intérieur de la chambre de stockage 24 lorsque la chambre de stockage 24 est remplie de matière visqueuse.

Dans ce premier mode de réalisation, les moyens de pilotage 27 sont configurés pour piloter les moyens d'alimentation 22 en fonction de la pression mesurée par les moyens de mesure de pression 28 dans la chambre de stockage 24.

En utilisation, lors d'un démarrage de cycle de fabrication, les moyens de pilotage 27 commandent la mise en fonction des moyens d'alimentation 22 pour alimenter les moyens de dépose 23 et déposer de la matière visqueuse sur le plateau d'impression 100.

Pour compenser l'inertie des moyens d'alimentation 22, notamment liée à la réduction en matière visqueuse de la poudre à l'intérieur de la trémie 221, la matière visqueuse présente dans la chambre de stockage 24 est utilisée pour alimenter les moyens de dépose 23, ou au contraire, pour empêcher leur alimentation.

L'inertie est notamment due au chauffage de la matière qui peut demander :
- un temps de chauffe de l'élément chauffant 23 avant de débuter la fonte de la poudre lors d'un début de cycle, ou
- un temps de refroidissement de l'élément chauffant 23 durant lequel la poudre est encore fondue.

Cette inertie en débit peut ainsi entraîner des défauts de fabrication.

En début de cycle de fabrication, l'inertie du bloc d'impression 2 peut entrainer un retard de dépôt de matière sur le plateau d'impression 100, alors que le déplacement relatif entre le plateau d'impression 100 et le bloc d'impression 2 a déjà débuté. Les défauts qui en résultent prennent alors la forme de porosités, c'est-à-dire une absence locale de matière.

Au contraire, en fin de cycle de fabrication, l'inertie du bloc d'impression 2 peut entrainer un maintien du débit de matière, et donc un dépôt supplémentaire de matière sur le plateau d'impression 100, alors que le déplacement relatif entre le plateau d'impression 100 et le bloc d'impression 2 est arrêté ou hors de la zone d'impression. Les défauts qui en résultent prennent alors la forme de bavures, c'est-à-dire un surplus local de matière.

La fin de cycle et le début de cycle peuvent également correspondre respectivement à un arrêt temporaire de dépôt de matière et une reprise de dépôt lors d'une même fabrication, entre lesquels intervient un déplacement relatif à vitesse accélérée entre le plateau d'impression 100 et le bloc d'impression 2 par exemple pour changer de zone de dépôt de matière.

Plus particulièrement, la tige 262 du vérin 26 est repoussée par l'actionneur 25 de sorte à réduire le volume V de la chambre de stockage 24 par déplacement de la portion mobile 242.

Ainsi, la matière visqueuse se trouvant dans la chambre de stockage 24 est dirigée vers les moyens de dépose 23 pour permettre la fabrication d'une pièce sur le plateau d'impression 100.

La chambre 24 est alors de nouveau alimentée en matière visqueuse par les moyens d'alimentation sans que le cycle de fabrication ne soit allongé ou qu'il y ait un risque de manque de matière dans la pièce fabriquée.

Autrement dit, l'utilisation de la matière visqueuse présente dans la chambre de stockage permet d'alimenter de manière rapide les moyens de dépose 23 sans que l'inertie des moyens d'alimentation 22 n'influent sur le cycle soit en le retardant, soit en générant des porosités c'est-à-dire des absences de matière dans la pièce fabriquée.

En outre, la présence de l'obturateur 3 permet d'autoriser un remplissage de la chambre de stockage 24 sans que la matière provenant des moyens d'alimentation 22 ne soit directement déposée sur le plateau d'impression 100.

Autrement dit, les moyens d'obturation 3 permettent d'autoriser un remplissage de la chambre de stockage 24 pour compenser l'inertie des moyens d'alimentation 22.

Selon un deuxième mode de réalisation illustré sur la [Fig.2], le bloc d'impression 2 intègre des moyens de pompage 4.

Les moyens de pompage 4 sont intercalés entre la chambre de stockage 24 et les moyens de dépose 23.

Les moyens de pompage 4 permettent le pompage de matière visqueuse présent dans la chambre de stockage 24 pour alimenter les moyens de dépose 23.

Tel qu'illustré sur la [Fig.2], les moyens de pompage 4 comprennent :
- un conduit 41 ;
- un capot 42 monté sur le châssis ;
- un mécanisme de roues dentées 43 agencé dans le conduit 41.

Les roues du mécanisme de roues dentées 43 sont par exemple entraînées en rotation par un moteur dédié non illustré sur les figures.

Plus précisément, le conduit 41 est pratiqué dans le châssis 21 et forme une voie de passage de matière visqueuse depuis la chambre de stockage 24 vers les moyens de dépose 23.

Le capot 42 est monté fixe sur le châssis de manière à refermer le conduit 41.

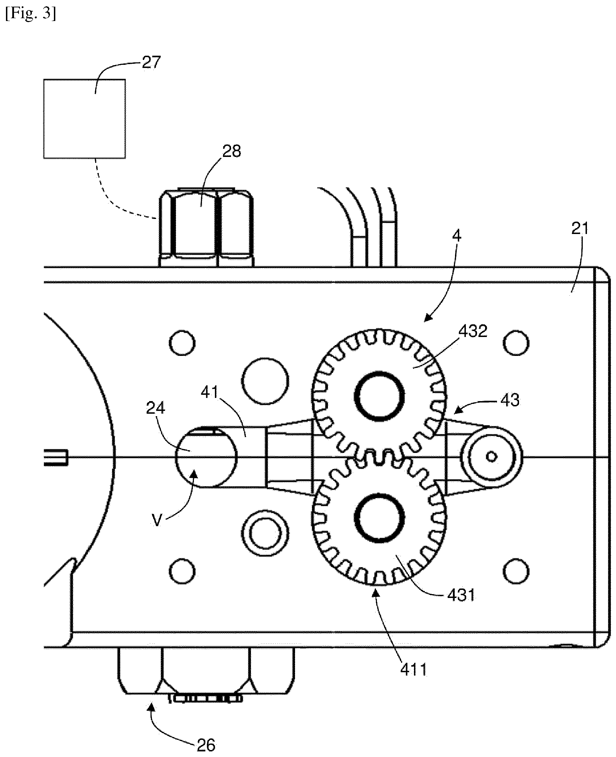

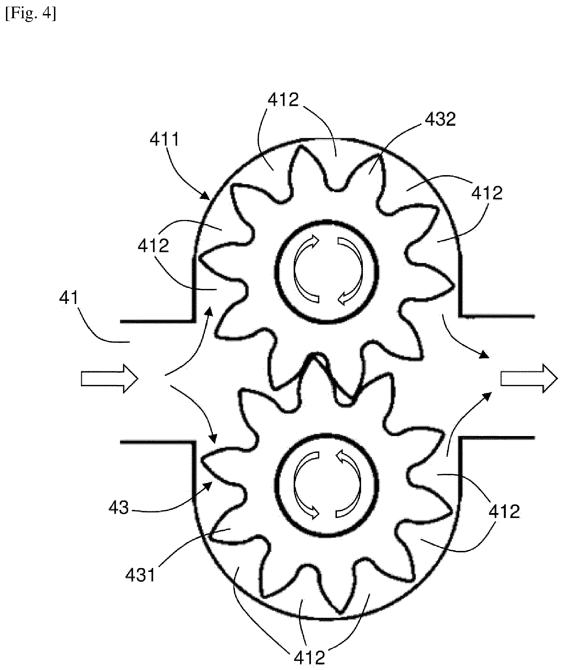

Tel que cela est illustré sur les figures 3 et 4, le mécanisme de roues dentées 43 comprend une première roue 431 et une deuxième roue 432.

La première roue 431 et la deuxième roue 432 engrènent ensemble pour entraîner la matière visqueuse depuis la chambre de stockage 24 vers les moyens de dépose 23.

Le conduit 41 est délimité par une paroi 411. La paroi 411 définit avec la première roue 431 et la deuxième roue 432 des encoches 412 à l'intérieur desquelles la matière visqueuse est entraînée pour atteindre les moyens de dépose 23.

En référence à la [Fig.4], la première roue 431 et la deuxième roue 432 tournent dans un sens opposé pour entraîner la matière visqueuse.

En outre, cela permet qu'en cas de rupture d'alimentation de l'une de la première roue 431 et de la deuxième roue 432, l'autre roue entraîne la roue qui n'est plus entraînée. Ainsi, le système de pompage 4 conserve une mesure de sécurité pour son fonctionnement et donc pour le fonctionnement du bloc d'impression 2, et de la machine 1 de fabrication additive.

Tel que cela est illustré sur la [Fig.2], le capot 42 présente une première cavité 431 et une deuxième cavité 422 destinées à être positionnées au-dessus du mécanisme de roues dentées 43.

La première cavité 421 communique avec le conduit 41 du côté de la chambre de stockage 24, et la deuxième cavité 422 communique avec le conduit 41 du côté des moyens de dépose 23.

La première cavité 421 et la deuxième cavité 422 assurent une voie de passage pour la matière visqueuse provenant des moyens d'alimentation 22, tout en limitant que la viscosité de la matière ne risque de boucher les moyens de pompage.

Dans ce deuxième mode de réalisation, l'actionneur 25 est avantageusement un moteur 252 par exemple un moteur électrique tel que cela est représenté sur la [Fig.7].

Le moteur électrique 252 peut être piloté par les moyens de pilotage 27 pour augmenter ou diminuer le volume V de la chambre de stockage 24 en fonction du besoin.

Dans ce mode de réalisation, le bloc d'impression 2 est ainsi dépourvu obturateur situé entre les moyens de dépose 23 et la chambre de stockage 24.

En utilisation, les moyens de pompage 4 entraînent la matière visqueuse depuis la chambre de stockage 24 vers les moyens de dépose 23 pour réaliser la pièce à imprimer sur le plateau d'impression 100.

A mesure que la chambre de stockage 24 se vide de matière visqueuse, le vérin 26 permet, par le déplacement de la tige 262, de réduire le volume V de la chambre de stockage 24, ce qui a pour effet d'alimenter de manière continue la première cavité 421 du système de pompage 4.

A mesure que la pression diminue dans la chambre de stockage 24, les moyens de pilotage 27 contrôlent les moyens d'alimentation 22 pour chauffer la poudre contenue dans la trémie 221 et mettre en rotation la vis sans fin 222.

En référence à la [Fig.5], un troisième mode de réalisation du bloc d'impression 2 est à présent décrit.

Ce troisième mode de réalisation correspond à un assemblage du premier mode de réalisation illustré par la [Fig.1] et du deuxième mode de réalisation illustré par les figures 2, 3 et 4.

Dans ce mode de réalisation, le bloc d'impression 2 est réalisé sur la base du bloc d'impression 2 décrit en référence aux figures 2, 3, 4, c'est-à-dire au deuxième mode de réalisation.

Le bloc d'impression 2 comprend en plus des moyens d'alimentation 22, des moyens de dépose 23, des moyens de pompage 4 et de la chambre de stockage 24, des moyens secondaires de dépose 29.

Ces moyens secondaires de dépose 29 sont positionnés, en amont des moyens de pompage 4, et sont reliés fluidiquement à la chambre de stockage 24.

En outre, selon ce troisième mode de réalisation, le bloc d'impression 2 comprend un clapet d'obturation 5.

Le clapet d'obturation 5 est positionné entre les moyens secondaires de dépose 29 et la chambre de stockage 24.

Le clapet d'obturation 5 permet, à l'instar de l'obturateur 3, d'empêcher la matière présente dans la chambre de stockage 24 d'être déposée sur le plateau d'impression 100 par les moyens secondaires de dépose 29, en dehors du cycle d'impression.

Les moyens secondaires de dépose 29 permettent ainsi une dépose de matière visqueuse soit en parallèle des moyens de dépose 23, soit en lieu et place des moyens de dépose 23. Cela s'avère notamment utile lorsque les moyens de dépose 23 ne sont pas alimentés en matière visqueuse par les moyens de pompage 4, par exemple lorsque les moyens de pompage 4 sont défectueux.

Ainsi, par l'utilisation des moyens de pilotage 27, des moyens d'alimentation 22, des moyens de mesure de pression 28 et de l'actionneur 25, il est possible, via le clapet d'obturation 5 et les moyens secondaires de dépose 29 de réaliser la dépose de matière visqueuse sur le plateau d'impression 100. Ceci permet de réaliser une pièce en trois dimensions même lorsque les moyens de dépose 23 sont obstrués ou que les moyens de pompage 4 ne fonctionnent pas.

En référence à la [Fig.5], les moyens secondaires de dépose 29 comprennent une tubulure 291 prolongeant le châssis 21 et une buse 292 située à une extrémité distale de la tubulure 291. La matière visqueuse s'écoule par la buse 292 sur le plateau d'impression 100.

En utilisation, lors d'un démarrage de cycle de fabrication, les moyens de pilotage 27 commandent la mise en marche des moyens d'alimentation 22 pour alimenter les moyens de dépose 23 et les moyens secondaires d'alimentation 29, et déposer de la matière visqueuse sur le plateau d'impression 100.

Pour compenser l'inertie du bloc d'impression 2, notamment la réduction en matière visqueuse de la poudre à l'intérieur de la trémie 221, la matière visqueuse présente dans la chambre de stockage 24 est utilisée pour alimenter les moyens de dépose 23 et/ ou les moyens secondaires de dépose 29.

Plus particulièrement, la tige 262 du vérin 26 est repoussée par l'actionneur 25 de sorte à réduire le volume V de la chambre de stockage 24 par déplacement de la portion mobile 242.

Ainsi, la matière visqueuse se vant dans la chambre de stockage 24 est dirigée vers les moyens de dépose 23 et les moyens secondaires de dépose 29 pour permettre la fabrication d'une pièce sur le plateau d'impression 100.

La chambre 24 est alors de nouveau alimentée en matière visqueuse par les moyens d'alimentation sans que le cycle de fabrication ne soit allongé ou qu'il y ait un risque de manque de matière dans la pièce fabriquée.

La présence du clapet d'obturation 5 permet d'autoriser un remplissage de la chambre de stockage 24 sans que la matière provenant des moyens d'alimentation 22 ne soient directement déposés sur le plateau d'impression 100 par les moyens secondaires de dépose 29.

Le clapet d'obturation 5 peut par exemple être ouvert pour autoriser l'alimentation des moyens secondaires de dépôt 29 lorsque les moyens de pompage 4 sont inactifs.

Le bloc d'impression 2 et la machine de fabrication additive 1 qui viennent d'être décrits permettent de limiter, voire de supprimer, les effets d'inertie des moyens d'alimentation 22 et notamment la transformation de poudre en matière visqueuse pour la réalisation de pièces à imprimer en trois dimensions via les moyens de dépose 23.

En effet, grâce à l'utilisation de la chambre de stockage 24, il est possible de conserver une quantité de matière visqueuse pour compenser l'inertie des moyens d'alimentation 22.

En d'autres termes, lors d'un arrêt de la machine 1 ou d'un arrêt de cycle de production, les moyens d'alimentation 22, par leur inertie et notamment par la fonte de la poudre et la rotation de la vis sans fin, génèrent une quantité de matière qui pourrait être déposée sur le plateau d'impression 100 ce qui créerait des bavures sur la pièce imprimée.

Grâce à la chambre de stockage 24 et à l'actionneur 25 qui permet de faire varier le volume V de la chambre de stockage 24, il est possible de stocker de manière temporaire la matière visqueuse provenant des moyens d'alimentation 22 de sorte à éviter les bavures sur la pièce imprimée.

La présence de l'obturateur 3 ou des moyens de pompage 4, et éventuellement du clapet d'obturation 5, permet de maintenir la matière visqueuse à l'intérieur de la chambre de stockage 24.

En outre, en l'absence de la chambre de stockage 24, l'inertie des moyens d'alimentation 22 et notamment la fonte de matière et l'entraînement en rotation de la vis ou l'absence d'entraînement en rotation de la vis sans fin pourrait engendrer une surpression à l'intérieur de la trémie 221 et un risque d'explosion de celle-ci.

Dans le cas d'un démarrage de cycle, la chambre de stockage 24 permet d'autoriser une alimentation directe des moyens de dépose 23 et/ou des moyens secondaires de dépose 29, par réduction du volume V de la chambre de stockage 24. La distribution de matière dans les moyens de dépose 23 et/ou les moyens secondaires de dépose 29, créée ainsi une dépression à l'intérieur de la chambre de stockage 24. Cette dépression est alors détectée et mesurée par les moyens de mesure de pression 28, puis transmise aux moyens d'alimentation 22 pour remplir de nouveau la chambre de stockage 24, et alimenter les moyens de dépose 23 et/ou les moyens secondaires de dépose 29.

En d'autres termes, lors d'un démarrage d'un cycle, la matière visqueuse est directement disponible, ce qui évite :
- soit de devoir attendre que la matière visqueuse atteigne les moyens de dépose 23 et/ou les moyens secondaires de dépose 29, allongeant alors la durée du cycle de fabrication,
- soit au contraire, que le cycle commence sans que la matière visqueuse ne puisse être déposée, ce qui engendre des porosités dans les pièces fabriquées, et implique une étape de finition.

Les moyens de mesure pression 28 permettent le pilotage des moyens d'alimentation pour autoriser ou empêcher le remplissage de la chambre de stockage 24.

Il en résulte grâce à la machine 1 d'impression et au bloc d'impression 2, selon l'invention, une augmentation de la qualité de production de pièces imprimées en trois dimensions et une réduction du coût d'exécution par l'utilisation d'une matière visqueuse obtenue à partir de poudre, comparativement aux solutions de l'art antérieur.

En effet, le débit du bloc d'impression 2 reste constant malgré les changements de vitesse et l'utilisation d'un matériau en poudre.

Le bloc d'impression qui vient d'être décrit peut être adapté à tout type de matériau en poudre (ou granulés) pouvant passer d'un état liquide à un état solide via un état visqueux, comme par exemple le métal, la céramique, le béton, ou encore un matériau composite, c'est-à-dire un matériau hybride constitué d'au moins deux matériaux.

A tout le moins, le bloc d'impression qui vient d'être décrit peut être adapté à tout matériau de type non-newtonien.

Un matériau non-newtonien est un matériau qui ne suit pas la loi de la viscosité de Newton, c'est-à-dire qu'il conserve une viscosité constante indépendamment de la contrainte ou sollicitation qui lui est appliquée.

Dans le cas présent un matériau non newtonien est un matériau qui ne se comporte pas de la même manière en fonction de la vitesse de la vis sans fin.

Autrement dit, un matériau non newtonien ne s'écoule pas plus vite si la vitesse de la vis augmente (il n'y a pas de proportionnalité entre la vitesse de la vis et la vitesse d'écoulement du matériau non newtonien).

## Revendications

1. Bloc d'impression (2) pour machine (1) de fabrication additive par dépôt de matière visqueuse obtenue à partir de poudre, le bloc d'impression (2) comprenant :
- des moyens d'alimentation (22) en matière visqueuse, incluant une vis sans fin (222) destinée à entraîner la matière visqueuse,
- des moyens de dépose (23) de matière visqueuse,
dans lequel le bloc d'impression (2) comprend également :
- au moins une chambre de stockage (24) de matière visqueuse délimitée par une paroi interne (241) présentant au moins une portion mobile (242), la chambre définissant un volume (V) de stockage et étant intercalée entre les moyens d'alimentation (22) et les moyens de dépose (23) ;
- au moins un actionneur (25) agissant sur le déplacement de la portion mobile (242) pour faire évoluer le volume (V) de la chambre de stockage (24),
**caractérisé en ce que** le bloc d'impression (2) comprend des moyens de pompage (4) de matière visqueuse, intercalés entre la chambre de stockage (24) et les moyens de dépose (23), et **en ce que** le bloc d'impression (2) comprend un châssis (21) dans lequel est réalisée la chambre de stockage (24),
et **en ce que** les moyens de pompage (4) comprennent :
- un conduit (41) pratiquée dans le châssis (21), le conduit (41) formant une voie de passage de matière visqueuse depuis la chambre de stockage (24) vers les moyens de dépose (23),
- un capot (42) monté fixe sur le châssis (21), le capot (42) refermant le conduit (41),
- un mécanisme de roues dentées (43) agencé dans le conduit (41),
le mécanisme de roues dentées (43) entraînant la matière visqueuse depuis la chambre de stockage (24) pour la refouler vers les moyens de dépose (23).

2. Bloc d'impression (2) selon la revendication précédente, **caractérisé en ce que** les moyens d'alimentation (22) comprennent également un élément chauffant (223) entourant au moins la vis sans fin (222).

3. Bloc d'impression (2) selon la revendication 1 ou 2, **caractérisé en ce qu'**il comprend également :
- des moyens de mesure de pression (28) dans la chambre de stockage (24) ;
- des moyens de pilotage (27) de la vis sans fin (222),
les moyens de pilotage (27) étant configurés pour piloter l'entraînement de la poudre par la vis sans fin (222) à partir d'informations de pressions mesurées par les moyens de mesure de pression (28).

4. Bloc d'impression (2) selon l'une quelconque des revendications précédentes, **caractérisé en ce qu'**il comprend également un obturateur (3) intercalé entre la chambre de stockage (24) et les moyens de dépose (23).

5. Bloc d'impression (2) selon la revendication précédente, **caractérisé en ce que** le capot (42) présente une première cavité (421) et une deuxième cavité (422) destinées à être positionnées au-dessus du mécanisme de roues dentées (43), la première cavité (421) communiquant avec le conduit (41) du côté de la chambre de stockage (24), et la deuxième cavité (422) communiquant avec le conduit (41) du côté des moyens de dépose (23).

6. Bloc d'impression (2) selon l'une quelconque des revendications précédentes, **caractérisé en ce qu'**il comprend :
- des moyens secondaires de dépose (29), en amont des moyens de pompage (4), reliés fluidiquement à la chambre de stockage (24),
- un clapet d'obturation (5) intercalé entre les moyens secondaires de dépose (29) et la chambre de stockage (24).

7. Bloc d'impression (2) selon l'une quelconque des revendications précédentes, **caractérisé en ce qu'**il comprend un vérin (26) incluant :
- une tige (262) dont une extrémité forme la portion mobile (242) de la paroi interne (241),
- un corps (261) par rapport auquel la tige (262) est mobile en translation,
et **en ce que** l'actionneur (25) prend la forme d'un ressort de compression (251) intercalé entre la tige (262) et le corps(261), le ressort de compression (251) tendant à écarter la tige (262) du corps (261).

8. Bloc d'impression (2) selon l'une quelconque des revendications 1 à 6, **caractérisé en ce qu'**il comprend un vérin (26) incluant :
- une tige (262) dont une extrémité forme la portion mobile (242) de la paroi interne (241),
- un corps (261) par rapport auquel la tige (262) est mobile en translation,
et **en ce que** l'actionneur (25) prend la forme d'un moteur (252) coopérant avec la tige (262) pour déplacer la tige (262) par rapport au corps (261).

9. Bloc d'impression (2) selon la revendication 3, **caractérisé en ce que** les moyens de pilotage (27) sont également configurés pour piloter l'actionneur (25) à partir d'informations de pressions mesurées par les moyens de mesure de pression (28).

10. Machine (1) de fabrication additive par matière visqueuse obtenue à partir de poudre, **caractérisée en ce qu'**elle comprend un bloc d'impression (2) selon l'une des revendications précédentes.

## Patentansprüche

1. Druckblock (2) für eine Maschine (1) zur additiven Fertigung durch Aufbringen von viskosem Material, das aus Pulver gewonnen wird, wobei der Druckblock (2) umfasst:
- Zuführmittel (22) für viskoses Material, die ein Schneckengetriebe (222) zum Mitführen des viskosen Materials einschließen,
- Aufbringmittel (23) für viskoses Material, wobei der Druckblock (2) außerdem umfasst:
- mindestens eine Speicherkammer (24) für viskoses Material, die durch eine Innenwand (241) begrenzt ist, die mindestens einen bewegbaren Abschnitt (242) aufweist, wobei die Kammer ein Speichervolumen (V) definiert und zwischen den Zuführmitteln (22) und den Aufbringmitteln (23) angebracht ist;
- mindestens einen Aktuator (25), der auf die Bewegung des bewegbaren Abschnitts (242) einwirkt, um das Volumen (V) der Speicherkammer (24) zu verändern,
**dadurch gekennzeichnet, dass** der Druckblock (2) Pumpmittel (4) für viskoses Material umfasst, die zwischen der Speicherkammer (24) und den Aufbringmitteln (23) angebracht sind, und **dadurch, dass** der Druckblock (2) einen Rahmen (21) umfasst, in dem die Speicherkammer (24) ausgebildet ist,
und **dadurch, dass** die Pumpmittel (4) umfassen:
- einen Kanal (41), der in dem Rahmen (21) ausgeführt ist, wobei der Kanal (41) einen Durchgang für viskoses Material von der Speicherkammer (24) zu den Aufbringmitteln (23) bildet,
- eine Abdeckung (42), die fest am Rahmen (21) montiert ist, wobei die Abdeckung (42) den Kanal (41) verschließt,
- einen Zahnradmechanismus (43), der in dem Kanal (41) angeordnet ist, wobei der Zahnradmechanismus (43) das viskose Material aus der Speicherkammer (24) mitführt, um es zu den Aufbringmitteln (23) zu fördern.

2. Druckblock (2) nach dem vorstehenden Anspruch,
**dadurch gekennzeichnet, dass** die Zuführmittel (22) außerdem ein Heizelement (223) umfassen, das mindestens das Schneckengetriebe (222) umgibt.

3. Druckblock (2) nach Anspruch 1 oder 2, **dadurch gekennzeichnet, dass** er außerdem umfasst:
- Druckmessmittel (28) in der Speicherkammer (24);
- Steuermittel (27) des Schneckengetriebes (222),
wobei die Steuermittel (27) konfiguriert sind, um das Mitführen des Pulvers durch das Schneckengetriebe (222) anhand von Druckinformationen zu steuern, die von den Druckmessmitteln (28) gemessen werden.

4. Druckblock (2) nach einem der vorstehenden Ansprüche,
**dadurch gekennzeichnet, dass** er außerdem einen Verschluss (3) umfasst, der zwischen der Speicherkammer (24) und den Aufbringmitteln (23) angebracht ist.

5. Druckblock (2) nach dem vorstehenden Anspruch,
**dadurch gekennzeichnet, dass** die Abdeckung (42) einen ersten Hohlraum (421) und einen zweiten Hohlraum (422) zur Positionierung über dem Zahnradmechanismus (43) aufweist, wobei der erste Hohlraum (421) mit dem Kanal (41) auf der Seite der Speicherkammer (24) in Verbindung steht und der zweite Hohlraum (422) mit dem Kanal (41) auf der Seite der Aufbringmittel (23) in Verbindung steht.

6. Druckblock (2) nach einem der vorstehenden Ansprüche,
**dadurch gekennzeichnet, dass** er umfasst:
- sekundäre Aufbringmittel (29) stromaufwärts der Pumpmittel (4), die fluidisch mit der Speicherkammer (24) verbunden sind,
- ein Verschlussventil (5), das zwischen den sekundären Aufbringmitteln (29) und der Speicherkammer (24) angebracht ist.

7. Druckblock (2) nach einem der vorstehenden Ansprüche,
**dadurch gekennzeichnet, dass** er ein Stellglied (26) umfasst, der einschließt:
- einen Schaft (262), dessen eines Ende den bewegbaren Abschnitt (242) der Innenwand (241) bildet,
- einen Körper (261), wobei der Schaft (262) relativ zu diesem translatorisch bewegbar ist,
**und dadurch, dass** der Aktuator (25) die Form einer Druckfeder (251) annimmt, die zwischen dem Schaft (262) und dem Körper (261) angebracht ist, wobei die Druckfeder (251) dazu neigt, den Schaft (262) vom Körper (261) wegzubewegen.

8. Druckblock (2) nach einem der Ansprüche 1 bis 6,
**dadurch gekennzeichnet, dass** er ein Stellglied (26) umfasst, der einschließt:
- einen Schaft (262), dessen eines Ende den bewegbaren Abschnitt (242) der Innenwand (241) bildet,
- einen Körper (261), wobei der Schaft (262) relativ zu diesem translatorisch bewegbar ist,
und **dadurch, dass** der Aktuator (25) die Form eines Motors (252) annimmt, der mit dem Schaft (262) zusammenwirkt, um den Schaft (262) relativ zum Körper (261) zu bewegen.

9. Druckblock (2) nach Anspruch 3, **dadurch gekennzeichnet, dass** die Steuermittel (27) außerdem konfiguriert sind, um den Aktuator (25) anhand von Druckinformationen zu steuern, die von den Druckmessmitteln (28) gemessen werden.

10. Maschine (1) zur additiven Fertigung unter Verwendung eines viskosen Materials, das aus Pulver gewonnen wird, **dadurch gekennzeichnet, dass** sie einen Druckblock (2) nach einem der vorstehenden Ansprüche umfasst.

## Claims

1. Printing unit (2) for a machine (1) for additive manufacturing by deposition of viscous material obtained from powder, the printing unit (2) comprising:
- means (22) for feeding viscous material, said means including an endless screw (222) for conveying the viscous material,
- means (23) for depositing viscous material, the printing unit (2) also comprising:
- at least one chamber (24) for storing viscous material, said chamber being delimited by an internal wall (241) having at least one movable portion (242), the chamber defining a storage volume (V) and being interposed between the feed means (22) and the depositing means (23);
- at least one actuating device (25) acting on the movement of the movable portion (242) to change the volume (V) of the storage chamber (24),
**characterized in that** the printing unit (2) comprises means (4) for pumping viscous material, said means being interposed between the storage chamber (24) and the depositing means (23), and **in that** the printing unit (2) comprises a frame (21) in which the storage chamber (24) is formed,
**and in that** the pumping means (4) comprise:
- a duct (41) provided in the frame (21), the duct (41) forming a passageway for viscous material from the storage chamber (24) to the depositing means (23),
- a cover (42) fixedly mounted on the frame (21), the cover (42) closing the duct (41),
- a gear mechanism (43) arranged in the duct (41), the gear mechanism (43) conveying the viscous material from the storage chamber (24) to deliver it toward the depositing means (23).

2. Printing unit (2) according to the preceding claim, **characterized in that** the feed means (22) also comprise a heating element (223) surrounding at least the endless screw (222).

3. Printing unit (2) according to claim 1 or 2, **characterized in that** it also comprises:
- means (28) for measuring pressure in the storage chamber (24);
- means (27) for controlling the endless screw (222),
the control means (27) being configured to control, on the basis of information relating to pressures measured by the pressure measurement means (28), the conveying of the powder by means of the endless screw (222).

4. Printing unit (2) according to any of the preceding claims,
**characterized in that** it also comprises a stopper (3) interposed between the storage chamber (24) and the depositing means (23).

5. Printing unit (2) according to the preceding claim, **characterized in that** the cover (42) has a first recess (421) and a second recess (422) that are intended to be positioned above the gear mechanism (43), the first recess (421) being in communication with the duct (41) on the storage chamber (24) side, and the second recess (422) being in communication with the duct (41) on the depositing means (23) side.

6. Printing unit (2) according to any of the preceding claims,
**characterized in that** it comprises:
- secondary depositing means (29), upstream of the pumping means (4), fluidically connected to the storage chamber (24),
- a shut-off valve (5) interposed between the secondary depositing means (29) and the storage chamber (24).

7. Printing unit (2) according to any of the preceding claims,
**characterized in that** it comprises an actuator (26) including:
- a rod (262), one end of which forms the movable portion (242) of the inner wall (241),
- a body (261) in relation to which the rod (262) is translatably movable,
and **in that** the actuator (25) takes the form of a compression spring (251) interposed between the rod (262) and the body (261), the compression spring (251) tending to move the rod (262) away from the body (261).

8. Printing unit (2) according to any of claims 1 to 6, **characterized in that** it comprises an actuator (26) including:
- a rod (262), one end of which forms the movable portion (242) of the inner wall (241),
- a body (261) in relation to which the rod (262) is translatably movable,
and **in that** the actuator (25) takes the form of a motor (252) interacting with the rod (262) to move the rod (262) relative to the body (261).

9. Printing unit (2) according to claim 3, **characterized in that** the control means (27) are also configured to control the actuator (25) on the basis of information relating to pressures measured by the pressure measurement means (28).

10. Machine (1) for additive manufacturing using viscous material obtained from powder, **characterized in that** it comprises a printing unit (2) according to one of the preceding claims.
